# EUROPÄISCHE PATENTSCHRIFT

(11) **EP 3 288 995 B1**
(45) Veröffentlichungstag und Bekanntmachung des Hinweises auf die Patenterteilung: **20.03.2024**
(21) Anmeldenummer: 16720757.0
(22) Anmeldetag: 21.04.2016
(51) Int. Cl.: B32B 7/00, B32B 27/00, B32B 27/06, B32B 27/40, B32B 7/12, C09J 175/12, C08G 18/12, C08G 18/32, C08G 18/40, C08G 18/50, C08G 18/48, C08G 18/76

(54) **POLYURETHAN-BASIERTES BINDEMITTEL-SYSTEM**
POLYURETHANE-BASED BINDER SYSTEM
SYSTÈME DE LIANT À BASE DE POLYURÉTHANE

(30) Priorität: 28.04.2015 DE 102015207792
(43) Veröffentlichungstag der Anmeldung: 07.03.2018
(73) Patentinhaber: Henkel AG & Co. KGaA, 40589 Düsseldorf (DE)
(72) Erfinder: BLODAU, Marcel, 47807 Krefeld (DE); POEL, Andre te, 47877 Willich (DE); MECKEL-JONAS, Claudia, 40597 Düsseldorf (DE)
(86) Internationale Anmeldenummer: PCT/EP2016/058922
(87) Internationale Veröffentlichungsnummer: WO 2016/173926

(56) Entgegenhaltungen:
- EP-A1- 1 634 904
- JP-A- 2005 089 491

## Beschreibung

Die vorliegende Erfindung betrifft die Verwendung eines Bindemittel-Systems enthaltend
(i) eine Harzkomponente enthaltend mindestens ein Isocyanat-terminiertes Polyurethan-Präpolymer; und
(ii) eine Härterkomponente, die mindestens ein alkoxyliertes Diamin enthält, als Laminierklebstoff für Lebensmittelverpackungen.

Zwei-Komponenten-Bindemittel-Systeme, insbesondere auf Basis von Polyolen und Isocyanat-terminierten (NCO-terminierten) Verbindungen, sind seit langem Stand der Technil<. Sie werden beispielsweise im Bereich der metallverarbeitenden Industrie, der Fahrzeugindustrie, der Elektroindustrie, der Verpackungsindustrie oder der Bauindustrie als Kleb-, Dicht-, Füllstoffe oder Vergussmassen (Casting) eingesetzt. Ein Nachteil von Bindemittel-Systemen auf Basis von Zwei-Komponenten-Polyurethan-Klebstoffen, insbesondere solchen, die in der Verpackungsindustrie eingesetzt werden, ist die Toxikologie von freien, monomeren Polyisocyanaten, die in den Bindemittel-Systemen enthalten sind. Solche freien, monomeren Polyisocyanate können in die Beschichtung oder Verklebung, oder zum Teil auch in die beschichteten oder verklebten Materialien hinein "wandern" und werden in Fachkreisen als "Migrate" bezeichnet. Durch Kontakt mit Feuchtigkeit werden die Isocyanatgruppen der Migrate kontinuierlich zu Aminogruppen umgesetzt, aus aromatischen Polyisocyanaten entstehen dabei die so genannten primären aromatischen Amine (PAA). Die Wanderung dieser Migrate durch das Verpackungsmaterial hindurch kann zu einer Kontamination des verpackten Gutes führen. Da PAAs toxikologisch besonders bedenklich und daher im Verpackungsbereich, speziell bei Lebensmittelverpackungen, besonders unerwünscht sind, hat der Gesetzgeber Grenzwerte für die Migrate aus Lebensmittelverpackungen erlassen, die unbedingt einzuhalten sind. Das macht es erforderlich, dass die zur Herstellung der Verbundfolien verwendeten Klebstoffs zum Zeitpunkt des Abpackens der Lebensmittel soweit ausreagiert sein müssen, dass die Grenzwerte sicher unterschritten werden. Deshalb müssen die Verpackungen, hierbei sind insbesondere Verbundfolien von Bedeutung, nach ihrer Herstellung vor dem Abpacken des Lebensmittels gelagert werden, bis die Reaktion so weit fortgeschritten ist, dass keine Migration von PAAs mehr feststellbar ist bzw. die vorgeschriebenen Grenzwerte unterschritten werden.

Abhängig von der Menge von migratfähigem freien monomeren Polyisocyanat sind daher lange Wartezeiten notwendig, bevor das Verpackungsmaterial lebensmittelkonform Ist und weiterverwendet werden darf. Es ist daher sowohl aus wirtschaftlichen wie auch logistischen Gründen wünschenswert, die notwendige Lagerzeit bis das Verpackungsmaterial weiterverwendet werden kann auf ein Minimum zu reduzieren.

Ein weiterer unerwünschter Effekt, der durch die Migration monomerer Polyisocyanate hervorgerufen werden kann, ist der sogenannte Antisiegeleffekt bei der Herstellung von Beuteln oder Tragetaschen aus kaschierten Kunststoff-Folien: Häufig enthalten die kaschierten Kunststoff-Folien Gleitmittel auf Basis von Fettsäureamiden. Durch Reaktion von migriertem monomeren Polyisocyanat mit dem Fettsäureamid und Feuchtigkeit werden an der Folienoberfläche Harnstoffverbindungen gebildet, die einen Schmelzpunkt besitzen, der über der Versiegelungstemperatur der Kunststoff-Folien liegen kann. Dadurch entsteht eine artfremde Antisiegelschicht zwischen den zu versiegelnden Folienteilen, die einer einheitlichen Siegelnahtbildung entgegenwirkt.

Es sind verschiedene Ansätze bekannt, die Migration von monomeren aromatischen Polyisocyanaten zu verhindern. Dazu zählen unter anderem die Reduzierung der Menge der bei der Synthese der Isocyanat-terminierten Polyurethan-Präpolymere verwendeten aromatischen Polyisocyanate, Mikrodestillation der Isocyanatmonomere, die Verwendung von Mischpräpolymeren mit mehrstufigen Aushärtemechanismen, und die Verwendung von speziellen Polyether-Backbones in NCO-terminierten Präpolymeren, wie sie beispielsweise in WO 2010/091806 beschrieben wird.

Nachteilig an den bekannten Ansätzen ist, dass die Reaktivität der Systeme erniedrigt wird (Reduzierung der Menge aromatischer Polyisocyanate) und dadurch ggf. Katalysatoren verwendet werden müssen, die wiederum ebenfalls toxikologisch problematisch sein können, spezielle aufwendige Prozesse und Anlagen notwendig sind (Mikrodestillation) oder es konzeptionell schwierig ist, die Präpolymersynthese abwandeln zu müssen (Verwendung spezieller Polyether-Backbones). Des Weiteren haben die in WO 2010/091806 beschriebenen Präpolymere den Nachteil autokatalytisch aktiv zu sein und daher nach spätestens vier Wochen Lagerung zu gelieren.

Zudem haben viele der bekannten Systeme, die die üblichen Metallkatalysatoren, wie z.B. Zinnbasierte Katalysatoren, oder Aminkatalysatoren, wie z.B. 1,4-Diazabicyclo[2.2.2]octan (DABCO), verwenden, den Nachteil, kurze Topfzeiten zu haben, was bei der Auftragung mittels üblicher Laminiermaschinen, insbesondere bei größeren Mengen, nachteilig ist. In solchen Systemen führen auch vergleichsweise große Mengen an Katalysator nicht zu einer signifikanten Verringerung der Migrationszeiten.

Aufgabe der vorliegenden Erfindung war es daher, ein Bindemittel-System zur Verfügung zu stellen, das diese Nachteile überwindet und trotz Verwendung konventioneller Isocyanat-terminierter Polyurethan (PU)-Präpolymere mit hohen Konzentrationen an Isocyanat-Monomeren eine schnelle chemische Aushärtung und damit eine schnelle Abnahme des Gehalts an Migraten zeigt, sodass das Verpackungsmaterial möglichst kurz nach seiner Fertigung eingesetzt und die notwendige Wartezeit somit gering gehalten werden kann. Zudem soll das Bindemittel-System eine ausreichend lange Topfzeit besitzen, um mittels der typischerweise verwendeten Laminiermaschinen einfach verarbeitbar zu sein.

Die Erfinder haben überraschenderweise gefunden, dass sich diese Aufgabe durch die Verwendung eines Bindemittel-Systems lösen lässt, das zur Härtung der Isocyanat-terminierten Polyurethan-Präpolymere eine spezielle Polyolmischung verwendet, die mindestens ein alkoxyliertes Diamin enthält.

In nooh einem weiteren Aspekt erfasst die Erfindung auch-Verfahren zur Herstellung von Folienverbunden für Lebensmittelverpackungen wobei mindestens zwei gleiche oder unterschiedliche Kunststofffolien unter Verwendung eines hierin beschriebenen Bindemittel-Systems teil- oder vollflächig verklebt werden, sowie den derart hergestellten Folienverbund.

Das hierin beschriebene Bindemittel-System ist geeignet für eine Verwendung in Klebstoffformulierungen, insbesondere als Zweikomponenten-Klebstoff, vorzugsweise als lösemittelfreier oder lösemittelhaltiger Kaschierklebstoff, zur Herstellung migratarmer Klebeverbindungen zwischen Substraten, wobei die Substrate insbesondere ausgewählt werden aus Papier, Pappe, Holz, Kunststoff, Metall oder Steingut.

Schließlich betrifft die Erfindung auch die Verwendung einer Zusammensetzung, die mindestens ein alkoxyliertes Diamin in einer Menge von 0,5 bis 20 Gew.-%, insbesondere 1 bis 10 Gew.-%, und mindestens ein Polyol in einer Menge von 80 bis 99,5 Gew.-%, vorzugsweise 90 bis 99 Gew.-%, bezogen auf die Polyolmischung enthält, als Härterkomponente in Klebstoffformulierungen, die auf Polyurethan-Präpolymeren basieren, welche mit aromatischen Isocyanaten terminiert sind, zur Herstellung migratarmer Klebeverbindungen zwischen Kunststofffolien für Lebensmittelverpackungen.

Die im vorliegenden Text angegebenen Molekulargewichte beziehen sich, soweit nicht anders angegeben, auf das Zahlenmittel des Molekulargewichts (M_{N}). Alle Molekulargewichtsangaben beziehen sich, soweit nicht anders angegeben ist, auf Werte, wie sie durch Gelpermeationschromatographie (GPC) gemäß DIN 55672, insbesondere DIN 55672-1 mit THF als Eluent, erhältlich sind.

Hydroxylzahlen (OH-Zahlen) werden gemäß DIN 53240 bestimmt, falls nicht anders angegeben.

Unter der OH-Funktionalität einer Verbindung ist die mittlere OH-Funktionalität zu verstehen. Sie gibt die mittlere Anzahl an Hydroxylgruppen pro Molekül an. Die mittlere OH-Funktionalität einer Verbindung kann auf Basis des zahlenmittleren Molekulargewichts und der Hydroxylzahl berechnet werden.

Der Isocyanatgehalt (NCO-Gehalt, %NCO) wird gemäß DIN EN ISO 11909 bestimmt, falls nicht anders angegeben.

Unter der NCO-Funktionalität einer Verbindung ist die mittlere NCO-Funktionalität zu verstehen.

Sie gibt die mittlere Anzahl von NCO-Gruppen pro Molekül an. Die mittlere NCO-Funktionalität kann aus dem zahlenmittleren Molekulargewicht und dem NCO-Gehalt der Verbindung berechnet werden.

Das molare Verhältnis von NCO- zu OH-Gruppen (NCO-Index) kann über die OH-Zahl und den NCO-Gehalt berechnet werden.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Überraschenderweise wurde gefunden, dass die hierin beschriebenen Bindemittel-Systeme sehr gut als Kleb/Dichtstoffe geeignet sind, wobei sie eine lange Topfzeit aufweisen, aber dennoch schnell chemisch vollständig aushärten und somit eine schnelle Abnahme des Gehalts an Migraten zeigen. Die Bindemittel-Systeme sind vorzugsweise "migratarm". Im folgenden Text wird unter dem Ausdruck "migratarm" verstanden, dass der Gehalt von primären aromatischen Aminen (PAA) nach 1 bis 14 Tagen, vorzugsweise 2 bis 6 Tagen, <0,2 µg PAA/100 mL Füllgut (Füllgut = Inhalt einer Verpackung die aus mit dem beschriebenen Klebstoffsystem verklebten Folien besteht) beträgt. Der Gehalt von primären aromatischen Aminen erfolgt dabei nach § 64 Lebensmittel- und Futtermittelgesetzbuch (LFGB) gemäß der Methode L00.00-6. Zur Prüfung der Migration von PAAs nach § 64 LFGB füllt man einen Beutel aus dem zu untersuchenden Folienverbund mit einem Lebensmittelsimulanz (wässrige Lösung enthaltend 3 Gew.-% Essigsäure), lagert diese für 2 h bei 70 °C und überprüft anschließend nach einer Derivatisierung photometrisch den Gehalt an PAAs. Dabei sind Gehalte kleiner 0,2 µg PAAs pro 100 ml Lebensmittelsimulanz zu erreichen. Dies entspricht 2 ppb und gleichzeitig der Nachweisgrenze der beschriebenen Methode.

Die NCO-terminierten PU-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise monomere Polyole, Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, 1,2-Propylenglykol, Glycerin, Butandiol, Butantriol, Trimethylolethan, Pentaerythrit, Hexandiol, Hexantriol, 3-Hydroxyphenol, Trimethylolpropan, Oktandiol, Neopentylglykol, 1,4-Hydroxymethylcyclohexan, Bis(4-hydroxyphenyl)dimethylmethan und Sorbit. Bevorzugt werden Ethylenglykol, 1,2-Propylenglykol, Glycerin und Trimethylolpropan eingesetzt, besonders bevorzugt Ethylenglykol und 1,2-Propylenglykol, und in einer besonders bevorzugten Ausführungsform wird 1,2-Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, 1,6-Hexandiol, 1,4-Butandiol, 1,2-Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höheren Homologen mit bis zu 16 Kohlenstoffatomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemisch aus zwei oder mehr davon eingesetzt werden. Besonders geeignete Alkohole sind 1,6-Hexandiol, 1,4-Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können beispielsweise aliphatisch, cycloaliphatisch, aromatisch oder heterocyclisch sein. Sie können gegebenenfalls substituiert sein, beispielsweise durch Alkylgruppen, Alkenylgruppen oder Ethergruppen. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäuren enthaltenden Fettgemisches mit einem oder mehreren Alkoholen mit 1 bis 12 Kohlenstoffatomen und anschließender partieller Umesterung der Triglycerid-Derivate zu Alkylesterpolyolen mit 1 bis 12 Kohlenstoffatomen im Alkylrest hergestellt werden.

Polycarbonatpolyole können beispielsweise durch die Reaktion von Diolen, wie 1,2-Propylenglykol, 1,4-Butandiol oder 1,6-Hexandiol, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht der zur Synthese des Präpolymers verwendeten Polyole liegt vorzugsweise im Bereich von 320 bis 20000 g/mol, insbesondere 330 bis 4500 g/mol. Die mittlere OH-Funktionalität liegt vorzugsweise im Bereich von 2 bis 4,5.

In verschiedenen Ausführungsformen der Erfindung werden als Polyole für die Herstellung der NCO-terminierten Präpolymere Polyesterpolyole verwendet, insbesondere solche die durch Kondensation von Adipinsäure und/oder Isophthalsäure mit Diethylenglykol und/oder 1,2-Propylenglykol erhältlich sind. Optional können für die Herstellung der NCO-terminierten Präpolymere neben Polyesterpolyolen zusätzlich noch Polyetherpolyole, insbesondere Polypropylenglykol, eingesetzt werden. Diese PU-Präpolymere sind durch Umsetzung von Polyisocyanaten mit einem Gemisch aus Polyethern und Polyestern erhältlich. In dieser besonders bevorzugten Ausführungsform weisen die NCO-terminierten Präpolymere also ein Polyether/Polyester-Polymerrückgrat auf.

Geeignete Polyisocyanate sind aliphatische, aromatische und/oder alicyclische Isocyanate mit zwei oder mehr, bevorzugt zwei bis höchstens etwa vier, Isocyanatgruppen. Besonders bevorzugt werden im Rahmen der vorliegenden Erfindung monomere Polyisocyanate, insbesondere monomere Diisocyanate, eingesetzt. Beispiele für geeignete monomere Polyisocyanate sind: 1,5-Naphthylendiisocyanat, 2,2'-, 2,4'- und/oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3-Phenylendiisocyanat, 1,4-Phenylendiisocyanat, 2,4- und/oder 2,6-Toluylendiisocyanats (TDI), 1-Methyl-2,4-diisocyanatocyclohexan, 2,2,4-Trimethylhexan-1,6-diisocyanat, 2,4,4-Trimethylhexan-1,6-diisocyanat, 2,3,3-Trimethylhexan-1,6-diisocyanat, 1-Isocyanatomethyl-3-isocyanato-1,5,5-trimethylcyclohexan (IPDI), phosphorhaltige Diisocyanate, Tetramethoxybutan-1,4-diisocyanat, Ethylen-1,2-diisocyanat, Butan-1,4-diisocyanat, Pentan-1,5-diisocyanat, Hexan-1,6-diisocyanat (HDI), Undecan-1,11-diisocyanat, Dodecan-1,12-diisocyanat, Dicyclohexylmethandiisocyanat, Cyclohexan-1,4-diisocyanat, Phthalsäure-bis-isocyanato-ethylester, Dimerfettsäurediisocyanat. 1,3-Cyclohexandiisocyanat, 1,4-Cyclohexandiisocyanat, 1,3- bzw. 1,4-Tetramethylxyloldiisocyanat und Lysinesterdiisocyanat.

Als mindestens trifunktionelle Isocyanate geeignet sind beispielsweise Polyisocyanate, die durch Trimerisation oder Oligomerisation von Diisocyanaten entstehen, wie beispielsweise die trimeren Isocyanurate, oder durch Reaktion von Diisocyanaten mit polyfunktionellen hydroxyl- oder aminogruppenhaltigen Verbindungen. Als polyfunktionelle hydroxylgruppenhaltige Verbindungen zur Herstellung der mindestens trifunktionellen Isocyanate sind beispielsweise Glycerin, Trimethylolpropan, Trimethylolethan, Pentaerythritol sowie Zuckeralkohole, wie beispielsweise Sorbit, Mannit, Isomalt, Maltit und Xylit, geeignet.

Zur Herstellung von Trimeren geeignete Isocyanate sind beispielsweise die bereits oben genannten Diisocyanate, wobei die Trimerisierungsprodukte der Isocyanate HDI, MDI, TDI oder IPDI besonders bevorzugt sind.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Es eignen sich ebenfalls polymere Isocyanate, wie sie beispielsweise als Rückstand im Destillationssumpf bei der Destillation von Diisocyanaten anfallen.

Die eingesetzten Polyisocyanate sind vorzugsweise aromatische Polyisocyanate, besonders bevorzugt aromatische Diisocyanate. In einer bevorzugten Ausführungsform der Erfindung werden daher als Polyisocyanate monomere Polyisocyanate aus der Gruppe 1,5-Naphthylendiisocyanat, 2,2'-, 2,4- und/oder 4,4'-Diphenylmethandiisocyanat (MDI), die 2,4- und/oder 2,6-Toluylendiisocyanat (TDI), Tetramethylxylylendiisocyanat (TMXDI), Trimerisierungsprodukte der Isocyanate MDI oder TDI; sowie Gemische daraus, eingesetzt. Besonders bevorzugt sind die Isomeren des Diphenylmethandiisocyanats, also 4,4'-MDI, 2,4'-MDI und 2,2'-MDI, bzw. Mischungen davon. Insbesondere bevorzugt ist dabei 4,4'-MDI, da bei Verwendung dieses Isomers die Abnahme des Gehalts an Migraten besonders schnell verläuft.

Das mindestens eine NCO-terminierte PU-Präpolymer ist daher vorzugsweise ein aromatisches Isocyanat-terminiertes aus einem oder mehreren Polyesterpolyol(en) und einem aromatischen Diisocyanat.

In einer besonders bevorzugten Ausführungsform handelt es sich bei dem mindestens einen NCO-terminierten PU-Präpolymer um ein MDI-terminiertes Polyurethan-Präpolymer herstellbar aus einem oder mehreren Polyesterpolyol(en) und MDI.

Erfindungsgemäß bevorzugt sind NCO-terminierte Präpolymere mit einem Polyester/Polyether-Polymerrückgrat, insbesondere solche aus einem Polyesterpolyol, Polypropylenglykol und MDI, wobei das Polyesterpolyol durch Kondensation von Adipin- und Isophthalsäure mit einem Überschuss an Diethylenglykol und 1,2-Propylenglykol erhältlich ist.

In einer bevorzugten Ausführungsform weist das Isocyanat-terminierte Polyurethan-Präpolymer kein Polyether-Polymerrückgrat auf, das einen Amin-initiierten Polyether umfasst.

Der stöchiometrische Überschuss von Polyisocyanat bei der Synthese der Präpolymere beträgt bezogen auf das molare Verhältnis von NCO- zu OH-Gruppen vorzugsweise 1:1 bis 5:1, weiter bevorzugt 2:1 bis 4:1 und insbesondere bevorzugt 2,5:1 bis 3.5:1.

Die entsprechenden Präpolymere weisen üblicherweise einen NCO-Gehalt von 3 bis 20 Gew.-%, vorzugsweise von 5 bis 17 Gew.-% auf und haben eine mittlere NCO-Funktionalität von 2 bis 3.

Aufgrund des eingesetzten Überschusses an Isocyanat, enthalten die NCO-terminierten PU-Präpolymere üblicherweise gewisse Mengen an Isocyanat-Monomeren, d.h. insbesondere an aromatischen Polyisocyanat-Monomeren, wie beispielsweise MDI. Die Menge kann hierbei üblicherweise 0,1 bis 40 Gew.-%, beispielsweise 20 bis 30 Gew.-%, bezogen auf das Gesamtgewicht der Harzkomponente, betragen. Häufig wird ein Gehalt von weniger als 1 Gew.-% angestrebt, um die Menge an gesundheitsgefährdenden Migraten zu minimieren, allerdings zeigen solche Harzkomponenten eine vergleichsweise hohe Viskosität. Durch die Verwendung einer Härterkomponente, die mindestens ein alkoxyliertes Diamin enthält, ist nun aber der Einsatz konventioneller Harzkomponenten, also solcher mit einem NCO-Gehalt von 20 bis 30 Gew.-% bezogen auf das Gesamtgewicht der Harzkomponente, möglich, da das alkoxyliertes Diamin die Menge an Migraten reduziert.

Das Molekulargewicht (M_{N}) des Präpolymers liegt üblicherweise im Bereich von 500 g/mol bis 100000 g/mol, bevorzugt von 600 g/mol bis 25000 g/mol insbesondere bevorzugt von 700 g/mol bis 6000 g/mol.

Die Herstellung der NCO-terminierten Präpolymere ist dem Fachmann an sich bekannt und erfolgt beispielsweise derart, dass die bei Reaktionstemperaturen flüssigen Polyole mit einem Überschuss der Polyisocyanate vermischt werden und die resultierende Mischung bis zum Erhalt eines konstanten NCO-Wertes gerührt wird. Als Reaktionstemperatur werden Temperaturen im Bereich von 40°C bis 180°C, vorzugsweise 50°C bis 140°C gewählt.

In dem Bindemittel-System ist neben der Harzkomponente eine Härterkomponente enthalten. Die Härterkomponente enthält mindestens ein alkoxyliertes Diamin, vorzugsweise in einer Menge von 0,5 bis 20 Gew.-%, noch bevorzugter 1 bis 10 Gew.-%. Vorzugsweise enthält die Härterkomponente neben dem alkoxylierten Diamin mindestens ein davon unterschiedliches Polyol in einer Menge von 80 bis 99,5 Gew.-%, insbesondere 90 bis 99 Gew.-%. Bei diesem mindestens einen Polyol kann es sich um ein oder mehrere Polyole handeln, die aus denen ausgewählt werden, die oben im Zusammenhang mit der Herstellung der Präpolymere offenbart werden. Vorzugsweise handelt es sich bei diesen weiteren Polyolen um di-und/oder trifunktionelle Polyetherpolyole, beispielsweise wie oben beschrieben.

Beispiele für geeignete alkoxylierte Diamine schließen ein, ohne darauf beschränkt zu sein, Polyetherpolyole, die unter Verwendung von einem Diamin als Starter und Ethylenoxid und/oder Propylenoxid erhältlich sind, insbesondere ethoxylierte und/oder propoxylierte Alkylendiamine. Als Diamine sind beispielsweise geeignet, ohne darauf beschränkt zu sein, Ethylendiamin, N,N-Dimethylethylendiamin, N,N'-Dimethylethylendiamin, Propylendiamin, Tetramethylendiamin, Hexamethylendiamin, 2,4-Toluylendiamin, 2,6-Toluylendiamin, Diphenylmethan-2,2'-diamin, Diphenylmethan-2,4'-diamin, Diphenylmethan-4,4'-diamin, Isophorondiamin, Dicyclohexylmethan-4,4'-diamin und Xylylendiamin. Bevorzugt werden die Diamine Ethylendiamin, N,N-Dimethylethylendiamin und N,N'-Dimethylethylendiamin, besonders bevorzugt Ethylendiamin.

In verschiedenen Ausführungsformen der Erfindung werden als alkoxylierte Diamine Verbindungen der Formel I eingesetzt:

H-[O-CHR-CH₂]ₘ-NR'-(CH₂)ₙ-NR'-[CH₂-CHR-O]ₘ-H (I)

wobei
jedes R unabhängig ausgewählt wird aus H, CH₃ und CH₂-CH₃, vorzugsweise H und CH₃, besonders bevorzugt CH₃;
jedes R' unabhängig ausgewählt wird aus H und -[CH₂-CHR-O]ₘ-H, vorzugsweise -[CH₂-CHR-O]ₘ-H;
jedes m unabhängig eine ganze Zahl von 1 bis 10, vorzugsweise 1 bis 4, noch bevorzugter 1 bis 2 ist;
n eine ganze Zahl von 1 bis 10, vorzugsweise 1 bis 6, besonders bevorzugt 2 bis 4, am bevorzugtesten 2 ist.

In bevorzugten Ausführungsformen handelt es sich bei dem alkoxylierten Diamin um propoxyliertes oder ethoxyliertes/propoxyliertes Ethylendiamin mit 2 bis 8 Einheiten Propylenoxid/Ethylenoxid pro Ethylendiamineinheit.

Derartige Diamine sind beispielsweise unter den Handelsnamen Voranol^{®} RA 500, RA 640 und RA 800 (Dow Chemicals) erhältlich.

Ebenfalls geeignet sind Mischungen von 2 oder mehr der vorstehend beschriebenen alkoxylierten Diamine.

Das hierin beschriebene Bindemittel-System kann in verschiedenen Ausführungsformen ferner mindestens einen Katalysator enthalten, vorzugsweise Aminl<atalysatoren oder Metalll<atalysatoren auf Basis von Sn, Zn, Bi, Zr, V oder Ti. Geeignete Katalysatoren sind im Stand der Technik bekannt. In bevorzugten Ausführungsformen enthält das Bindemittel-System aber keinen solchen Katalysator.

Das hierin beschriebene Bindemittel-System eignet sich insbesondere als Kleb/Dichtstoff.

Ein Verfahren zur Herstellung eines Kleb-/Dichtstoffes unter Verwendung des hierin beschriebenen Bindemittel-Systems umfasst die folgenden Schritte, dass man die Harzkomponente mit der Härterkomponente im Verhältnis der Isocyanatgruppen zu NCO-reaktiven Gruppen von 1:1 bis 4:1, bevorzugt 1:1 bis 3:1, weiter bevorzugt 1,2:1 bis 2,5:1 und insbesondere bevorzugt 1,2:1 bis 1,8:1 mischt, wobei es sich bei den NCO-reaktiven Gruppen vorzugsweise um Hydroxylgruppen handelt.

Der so erhältliche Kleb-/Dichtstoff hat in verschiedenen Ausführungsformen 60 Minuten nach der Mischung der beiden Komponenten eine Viskosität bei 40°C von 2000 bis 30000 mPas, vorzugsweise 4000 bis 12000 mPas (gemäß DIN EN ISO 2555, Brookfield RVT DV II+, Spindel Nr. 27, Scherrate: 20 min⁻¹).

In einer Ausführungsform des hierin beschriebenen Verfahrens erfolgt die Reaktion zwischen Harz-und Härterkomponente in Gegenwart eines Lösemittels. Als Lösemittel sind grundsätzlich alle dem Fachmann bekannte Lösemittel verwendbar, insbesondere Ester, Ketone, halogenierte Kohlenwasserstoffe, All<ane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutyll<eton, Dioxan, Ethylacetat, Ethylenglykolmonobutyletheracetat, Ethylenglykolmonoethylacetat, 2-Ethylhexylacetat, Glyl<oldiacetat, Heptan, Hexan, Isobutylacetat, Isooctan, Isopropylacetat, Methylethyiketon, Tetrahydrofuran oder Tetrachlorethylen oder Mischungen aus zwei oder mehr der genannten Lösemittel. In bevorzugten Ausführungsformen wird allerdings kein Lösemittel eingesetzt.

Das hierin beschriebene Bindemittel-System eignet sich als Zweikomponenten-Klebstoff zum Verkleben und Dichten der unterschiedlichsten Substrate. Zu diesen Substraten zählen beispielsweise Holz, Metall, Glas, Pflanzenfasern, Stein, Papier, Cellulosehydrat, Kunststoffe wie Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide. Bevorzugte Substrate sind folienförmige Substrate und schließen ein, sind aber nicht beschränkt auf Kunststofffolien und Metallfolien. Kunststofffolien, die als Substrat eingesetzt werden schließen Folien aus Polypropylen (PP), Polyethylen (PE), orientiertem Polypropylen (OPP), orientiertes Polyamid (OPA), Nylon, Polyethylenterephthalat (PET) und Polyestern ein. Metallfolien können beispielsweise aus Aluminium, Blei oder Kupfer bestehen.

Im Rahmen der Erfindung wird das hierin beschriebene Bindemittel-System als Laminierklebstoff für Lebensmittelverpackungen verwendet.

Das hierin beschriebene Bindemittel-System kann mit allen gängigen Auftragsverfahren auf die zu verklebenden Substrate aufgebracht werden, beispielsweise durch Sprühen, Rakeln, 3-4-Walzenauftragswerke im Falle der Anwendung eines lösemittelfreien Bindemittel-Systems oder 2-Walzenauftragswerke im Falle der Anwendung eines lösemittelhaltigen Bindemittel-Systems. Ein weiterer Gegenstand der vorliegenden Erfindung ist auch ein Verfahren zur Herstellung von Folienverbunden für Lebensmittelverpackungen, die durch das teil- oder vollflächige Verkleben von mindestens zwei gleichen oder unterschiedlichen Kunststofffolien erhältlich sind, unter Verwendung des hierin beschriebenen Bindemittel-Systems. Der Auftrag des Bindemittel-Systems als Zwei-Komponenten-Klebstoff auf die zu verklebenden Folien kann mit üblicherweise für solche Zwecke eingesetzten Maschinen, beispielsweise mit herkömmlichen Laminiermaschinen, erfolgen. Ein weiterer Gegenstand der Erfindung ist eine Verbundfolie, hergestellt nach dem hierin beschriebenen Verfahren unter Verwendung des hierin beschriebenen Bindemittel-Systems. Die Verbundfolie ist insbesondere zur Verpackung von Lebens- und Genussmitteln und Arzneimitteln geeignet.

Das hierin beschriebene Bindemittel-System kann übliche Additive, wie Weichmacher, Silane, Antioxidantien, UV-Stabilisierungsmittel und Alterungsschutzmittel enthalten. Bevorzugt einsetzbare Weichmacher sind Phthalsäureester, beispielsweise Dioctylphthalat, Ditridecylphthalat und Butylbenzylphthalat, Phosphorsäureester, beispielsweise Tricresylphosphat, Adipate, beispielsweise Dioctyladipat, oder Benzoate, beispielsweise Propylenglykoldibenzoat.

Amino-, Epoxy-, oder Mercaptosilane, insbesondere γ-Gtycidytoxypropyt- oder γ- Aminopropyltrimethoxysilan, dienen vor allem der Verbesserung der Haftung auf Glas, Metallen etc.

Zur Verwendung als Dichtungsmasse werden dem hierin beschriebenen Bindemittel-System anorganische Füllstoffe wie Ruß, Calciumcarbonat, Titandioxid und dergleichen zugesetzt. Als anorganische Füllstoffe finden vorzugsweise hochdisperse Kieselsäuren, vor allem pyrogene Kieselsäuren oder Fällungskieselsäuren Verwendung, welche thixotropierend wirken und deren thixotropierende Eigenschaften in den hierin beschriebenen Bindemittel-Systemen auch nach längerer Lagerung erhalten bleiben.

Die hierin beschriebenen Bindemittel-Systeme können in Klebstoffformulierungen zur Herstellung migratarmer Klebeverbindungen zwischen Substraten verwendet werden. Dabei können die Substrate aus den bereits oben genannten ausgewählt werden und umfassen insbesondere Kunststoff- und Metallfolien, beispielsweise solche die in Lebensmittelverpackungen eingesetzt werden.

Die im Zusammenhang mit den Bindemittel-Systemen beschriebene Härterzusammensetzung, die mindestens ein alkoxyliertes Diamin in einer Menge von 0,5 bis 20 Gew.-%, insbesondere 1 bis 10 Gew.-%, und mindestens ein Polyol in einer Menge von 80 bis 99,5 Gew.-%, vorzugsweise 90 bis 99 Gew.-%, bezogen auf die Polyolmischung enthält, kann als Härterkomponente in Klebstoffformulierungen, die auf Polyurethan-Präpolymeren basieren, welche mit aromatischen Isocyanaten terminiert sind, zur Herstellung migratarmer Klebeverbindungen zwischen Substraten verwendet werden. Die Substrate können dabei wie oben definiert sein.

Alle hierin im Zusammenhang mit dem Bindemittel-System offenbarten Ausführungsformen sind auch auf die beschriebenen Verwendungen und Verfahren anwendbar und umgekehrt.

Nachfolgend soll die Erfindung an einigen exemplarischen Beispielen näher erläutert werden. Dabei sind die angegeben Mengen Gewichtsprozent, falls nicht anders angegeben.

### Beispiele

### Versuchsreihe 1:

Beispiel 1a (nicht erfindungsgemäß):
   Harzkomponente: Loctite Liofol LA 7731 (MDI-terminiertes Polyether/Polyester-PU-Präpolymer, erhältlich von Henkel)
   Härterkomponente: Loctite Liofol LA 6038 (Polyolgemisch aus Dipropylenglykol (DPG) und propylenoxidbasierten trifunktionellen Polyetherpolyolen mit überwiegend sekundären Hydroxylendgruppen; erhältlich von Henkel).
Beispiel 1b (erfindungsgemäß): wie Beispiel 1a, aber in der Härterkomponente werden 5 Gew.-% DPG ausgetauscht gegen Voranol R800 (OH-Zahl 780-820 mg KOH/g; Oxypropylen-Addukt von Ethylendiamin, erhältlich von The Dow Chemical Company)
Beispiel 1c (erfindungsgemäß): wie Beispiel 1a, aber in der Härterkomponente werden 5 Gew.-% DPG ausgetauscht gegen Voranol R640 (OH-Zahl 615-665 mg KOH/g; Oxypropylen-Addukt von Ethylendiamin, erhältlich von The Dow Chemical Company)
Beispiel 1d (erfindungsgemäß): wie Beispiel 1a, aber in der Härterkomponente werden 5 Gew.-% DPG ausgetauscht gegen Voranol RA500 (OH-Zahl ca. 500 mg KOH/g; Oxypropylen-Addukt von Ethylendiamin, erhältlich von The Dow Chemical Company)
Beispiel 1e (nicht erfindungsgemäß): wie Beispiel 1a, aber in der Härterkomponente werden 0,05 Gew.-% Polyetherpolyol ausgetauscht gegen Dioctylzinndilaurat (DOTL)
Beispiel 1f (nicht erfindungsgemäß): wie Beispiel 1a, aber in der Härterkomponente werden 0,1 Gew.-% Polyetherpolyol ausgetauscht gegen 1,4-Diazabicyclo[2.2.2]octan (DABCO)
Beispiel 1g (nicht erfindungsgemäß): wie Beispiel 1a, aber in der Härterkomponente werden 1 Gew.-% Polyetherpolyol ausgetauscht gegen Triethanolamin

### Versuchsreihe 2:

Beispiel 2a (nicht erfindungsgemäß): wie Beispiel 1a
Beispiel 2b (erfindungsgemäß): wie Beispiel 1d
Beispiel 2c (erfindungsgemäß): wie Beispiel 1b
Beispiel 2d (nicht erfindungsgemäß): wie Beispiel 1a, aber in der Härterkomponente werden 5 Gew.-% DPG ausgetauscht gegen Desmophen V 155 (Oxypropylen-Addukt von Triethanolamin, erhältlich von Bayer MaterialScience)
Beispiel 2e (nicht erfindungsgemäß): wie Beispiel 1a, aber in der Härterkomponente werden 5 Gew.-% DPG ausgetauscht gegen TIPA (Triisopropanolamin).
Beispiel 2f (nicht erfindungsgemäß): wie Beispiel 1a, aber anstelle der Harzkomponente wird ein Präpolymer aus einem tertiären Amin-initiierten Polyetherpolyol (Voranol Voractiv VM 779, erhältlich von The Dow Chemical Company), Polypropylenglykol (PPG2000) und 2,4'-/4,4'-MDI (Desmodur 2460, erhältlich von Bayer MaterialScience) verwendet.

Eine OPA/PE-Struktur kaschiert mit 1,8 g/m² Klebstoff wurde verwendet, um mittels der BfR-Methode PAA in Füllgutsimulanz (3%ige Essigsäure) zu messen. Die Ergebnisse sind als Mengen PAA in µg/100 mL Füllgutsimulanz in Tabelle 1 dargestellt. Der Sollwert beträgt < 2µg PAA/100 mL Füllgutsimulanz. Schwankungen in der Versuchsdurchführung, beispielsweise in der Qualität der Folien bzw. der Klebstoffauftragsgewichte, können einen Einfluss auf die gemessenen PAA-Werte haben. Aus diesem Grund sollten absolute PAA-Werte nur innerhalb einer Versuchsreihe verglichen werden, d.h. im vorliegenden Fall nur innerhalb der Versuchsreihe 1 und innerhalb der Versuchsreihe 2.

Des Weiteren wurde die Verbundhaftung (VH) in Anlehnung an die Norm DIN ISO 53357 bestimmt. Zur Bestimmung der Verbundhaftung werden mittels Streifenscheider 15 mm breite Streifen des Verbundes geschnitten. Der Verbund wird per Hand oder an einer heißen Siegelbackenkante angetrennt. Bei ausgehärteten Verbunden kann das Einlegen eines Endes des Verbundstreifens in Ethylacetat hilfreich sein. Die Verbundhaftung wird mittels einer Universal-Zugprüfmaschine, Kraftbereich 0-20 N (z.B. Fa. Instron oder Zwick) bestimmt. Dazu wird der vorher angetrennte Verbundstreifen eingespannt und die Zugprüfmaschine angefahren (Abzugsgeschwindigkeit = 100 mm/min; Abzugswinkel = 90° (manuell einzuhalten); Abzugslänge = 5 - 10 cm (je nach Schwankungsbereich)). Das Ergebnis wird als Verbundhaftungswert in N/15 mm angegeben, wobei der angegebene Wert der Mittelwert aus einer Dreifachmessung ist. Im Fall von Folienriss wird der maximale Wert angegeben.

Die Siegelnahthaftung (SNH) wird in Anlehnung an die Norm DIN ISO 55529 bestimmt. Dazu wird zunächst eine Siegelung der OPA/PE-Struktur gegen sich selbst (PE auf PE) bei 150°C für 1 s unter Ausübung einer Kraft von 650 N auf einer Fläche von 1 cm x 15 cm durchgeführt. Anschließend wird die Siegelnahthaftung wird mittels einer Universal-Zugprüfmaschine, Kraftbereich 0-20 N (z.B. Fa. Instron oder Zwick) bestimmt. Dabei werden zunächst mittels Streifenscheider 15 mm breite Streifen des Verbundes geschnitten, der Verbundstreifen eingespannt und die Zugprüfmaschine angefahren (Abzugsgeschwindigkeit = 100 mm/min; Abzugswinkel = 90° (manuell einzuhalten); Abzugslänge = 5 - 10 cm (je nach Schwankungsbereich)). Das Ergebnis wird als Siegelnahthaftungswert in N/15 mm angegeben, wobei der angegebene Wert der Mittelwert aus einer Dreifachmessung ist.

Die Viskosität (in mPas) wurde 60 Minuten nach dem Mischen bei 40°C bestimmt.

Des Weiteren wurde der NCO-Gehalt des Harzes (in Gew.-%) und die OH-Zahl des Härters (in mg KOH/g) bestimmt.

Das Mischungsverhältnis ist in Massenteilen (g/g) angegeben.

Tabelle 1 zeigt eine Übersicht der Messergebnisse.

**Tabelle 1:**

| Beispiel | PAA (BfR) [µg/100mL] | | | SNH (N/15mm) | VH (N/15mm) | | Viskosität (mPas) | NCO-Gehalt Harz (%) | OH-Zahl Härter (mg KOH/g) | Verhältnis Harz/Härter (g/g) |
|---|---|---|---|---|---|---|---|---|---|---|
| | 2d | 4d | 7d | 7d | 7d | 14d | | | | |
| 1a | 24,82 | 3,82 | 0,99 | 60* | 5,8* | 6,2* | 4425 | 13 | 246 | 100 : 48 |
| 1b | 17,97 | 2,75 | 0,50 | 62* | 7,0* | 7,0* | 3750 | 13 | 244 | 100 : 50 |
| 1c | 8,31 | 0,66 | 0,18 | 55* | 6,7* | 7,0* | 10900 | 13 | 236 | 100 : 55 |
| 1d | 5,76 | 0,66 | 0,19 | 54* | 6,9* | 6,8* | 9500 | 13 | 229 | 100 : 55 |
| 1e | 17,90 | 0,92 | 0,48 | 50* | 5,9* | 6,8* | *** | 13 | 246 | 100 : 48 |
| 1f | 25,05 | - | 0,89 | 57* | 5,9* | 6,1* | 15050 | 13 | 252 | 100 : 48 |
| 1g | 25,60 | - | 0,85 | 52* | 5,0* | 5,3* | 10825 | 13 | 255 | 100 : 50 |
| 2a | 8,11 | 0,27 | 0,07 | 63* | 7,4* | 6,8* | 4425 | 13 | 246 | 100 : 48 |
| 2b | 0,86 | 0,10 | | 51* | 7,6* | 6,2* | 9500 | 13 | 229 | 100 : 55 |
| 2c | 1,84 | 0,14 | 0,06 | 65* | 7,2* | 6,9* | 3750 | 13 | 244 | 100 : 50 |
| 2d | 0,53 | 0,07 | | 38** | 1,7** | 1,2** | 3900 | 13 | 212 | 100 : 50 |
| 2e | 6,45 | 0,27 | 0,10 | 74* | 7,9* | 6,1* | 8425 | 13 | 248 | 100 : 50 |
| 2f | 0,20 | 0,17 | | 33** | 3,2** | 3,1** | 6250 | 12 | 246 | 100 : 48 |

| | | | | | | | | | | |
|---|---|---|---|---|---|---|---|---|---|---|
| * Materialeinriss oder Materialabriss ** Separation an der Grenzfläche des Klebstoffs (adhäsive Trennung) *** 25000 mPas nach 12 min. Abbruch der Messung nach 20 min und 100000 mPas. | | | | | | | | | | |

Die Ergebnisse zeigen, dass die PAA-Werte im Fall der erfindungsgemäßen Bindemittel-Systeme schneller abklingen als bei den entsprechenden Referenzsystem, die keine alkoxylierten Diamine im Härter enthalten (Beispiele 1b, 1c und 1d vs. Beispiel 1a. Beispiele 2b und 2c vs. Beispiel 2a).

Die Verwendung von Triethanolamin im Härter führt zu keiner Abnahme der PAA-Werte im Vergleich zur Referenz (Beispiel 1g vs. Beispiel 1a).

Die Verwendung von Triisopropanolamin im Härter führt zu einem schnelleren Abklingen der PAA-Werte im Vergleich zur Referenz (Beispiel 2e vs. Beispiel 2a), allerdings ist der Effekt nicht so stark ausgeprägt wie bei Verwendung von alkoxylierten Diaminen (Beispiel 2e vs. Beispiele 2b und 2c)

Es zeigt sich weiter, dass die Verwendung von Zinnkatalysatoren zu einer etwas schnelleren Abnahme der PAA-Werte führt, allerdings auch zu einem schnelleren Anstieg der Viskosität, was einer Abnahme der Topfzeit entspricht (s. Beispiel 1e vs. Beispiel 1a). Der Einsatz von Zinnverbindungen in Lebensmittelverpackungen ist zudem gesundheitlich bedenklich.

Die Verwendung von Amin-Katalysatoren führt ebenfalls zu einer höheren Viskosität bzw. einer geringeren Topfzeit wie im Falle der Zinnkatalysatoren. Zudem ist kein beschleunigtes Abklingen der PAA-Werte zu beobachten (s. Beispiel 1f vs. Beispiel 1a).

Bindemittel-Systeme, bei denen Polyetherpolyole eingesetzt werden, die durch Alkoxylierung von Monoaminen herstellbar sind, zeigen ebenso wie die erfindungsgemäßen Zusammensetzungen ein schnelles Abklingen der PAA-Werte sowie niedrige Viskositäten, allerdings sind die Haftwerte niedriger (Beispiel 2d vs. 2b und 2c).

Ähnliches zeigt sich bei Bindemittel-Systemen, bei denen das Harz ein Isocyanat-terminiertes Präpolymer umfasst, das aus einem tertiären Amin-initiierten Polyetherpolyol hergestellt wurde. Auch hier sind vergleichbar schnell abklingende PAA-Werte und niedrige Viskositäten wie im Falle der erfindungsgemäßen Zusammensetzungen festzustellen, dafür zeigen sich allerdings schlechtere Haftwerte (Beispiel 2f vs. Beispiele 2b und 2c). Zudem zeigt ein Harz, das solche Präpolymere aufweist, eine verminderte Lagerstabilität, da die tertiären Aminogruppen im Polymerrückgrat des Isocyanat-terminierten Polyurethan-Präpolymers Reaktionen der Isocyanatgruppen katalysieren. Es ist also eine autokatalytische Aktivität der Präpolymere festzustellen, die sich negativ auf die Stabilität auswirkt. Dies stützt sich auf die Beobachtung, dass diese Präpolymere nach spätestens vier Wochen Lagerung in einem geschlossenen Gebinde fest waren.

## Patentansprüche

1. Verwendung eines Bindemittel-Systems enthaltend
(i) eine Harzkomponente enthaltend mindestens ein Isocyanat-terminiertes Polyurethan-Präpolymer; und
(ii) eine Härterkomponente, die mindestens ein alkoxyliertes Diamin enthält, als Laminierklebstoff für Lebensmittelverpackungen.

2. Verwendung eines Bindemittel-Systems nach Anspruch 1, **dadurch gekennzeichnet, dass** das mindestens eine alkoxylierte Diamin ein Polyetherpolyol ist, das durch Polymerisation von Ethylenoxid und/oder Propylenoxid unter Verwendung von einem Diamin als Starter erhältlich ist, insbesondere ein ethoxyliertes und/oder propoxyliertes Alkylendiamin.

3. Verwendung eines Bindemittel-Systems nach Anspruch 2, **dadurch gekennzeichnet**, das das Diamine ausgewählt wird aus Ethylendiamin, N,N-Dimethylethylendiamin, N,N'-Dimethylethylendiamin, Propylendiamin, Tetramethylendiamin, Hexamethylendiamin, 2,4-Toluylendiamin, 2,6-Toluylendiamin, Diphenylmethan-2,2'-diamin, Diphenylmethan-2,4'-diamin, Diphenylmethan-4,4'-diamin, Isophorondiamin, Dicyclohexylmethan-4,4'-diamin und Xylylendiamin, vorzugsweise aus Ethylendiamin, N,N-Dimethylethylendiamin und N,N'-Dimethylethylendiamin, besonders bevorzugt Ethylendiamin.

4. Verwendung eines Bindemittel-Systems nach einem der Ansprüche 1 bis 3, **dadurch gekennzeichnet, dass** das mindestens eine alkoxylierte Diamin eine Verbindung der Formel I ist:
H[O-CHR-CH₂]ₘ-NR'-(CH₂)ₙ-NR'-[CH₂-CHR-O]ₘ-H (I)
wobei
jedes R unabhängig ausgewählt wird aus H, CH₃ und CH₂-CH₃, vorzugsweise H und CH₃, besonders bevorzugt CH₃;
jedes R' unabhängig ausgewählt wird aus H und -[CH₂-CHR-O]ₘ-H, vorzugsweise
-[CH₂-CHR-O]ₘ-H;
jedes m unabhängig eine ganze Zahl von 1 bis 10, vorzugsweise 1 bis 4, noch bevorzugter 1 bis 2 ist;
n eine ganze Zahl von 1 bis 10, vorzugsweise 1 bis 6, besonders bevorzugt 2 bis 4, am bevorzugtesten 2 ist.

5. Verwendung eines Bindemittel-Systems nach Anspruch 4, **dadurch gekennzeichnet, dass** das mindestens eine alkoxylierte Diamin ein propoxyliertes oder ethoxyliertes/propoxyliertes Ethylendiamin mit 2 bis 8 Einheiten Propylenoxid/Ethylenoxid pro Ethylendiamineinheit ist.

6. Verwendung eines Bindemittel-Systems nach einem der Ansprüche 1 bis 5, **dadurch gekennzeichnet, dass** die Härterkomponente das mindestens eine alkoxylierte Diamin in einer Menge von 0,5 bis 20 Gew.-%, insbesondere 1 bis 10 Gew.-%, bezogen auf die Härterkomponente enthält.

7. Verwendung eines Bindemittel-Systems nach einem der Ansprüche 1 bis 6, **dadurch gekennzeichnet, dass** die Härterkomponente ferner mindestens ein Polyol, insbesondere mindestens ein di- und/oder trifunktionelles Polyetherpolyol, enthält.

8. Verwendung eines Bindemittel-Systems nach einem der Ansprüche 1 bis 7, **dadurch gekennzeichnet, dass** das Isocyanat-terminierte Polyurethan-Präpolymer aromatische Isocyanatgruppen, insbesondere Methylendiphenyldiisocyanat (MDI)-Gruppen, und optional aromatische Polyisocyanat-Monomere, insbesondere aromatische Diisocyanat-Monomere, enthält.

9. Verwendung eines Bindemittel-Systems nach einem der Ansprüche 1 bis 8, **dadurch gekennzeichnet, dass** das Isocyanat-terminierte Polyurethan-Präpolymer ein Polyester/Polyether-Polymerrückgrat aufweist.

10. Verwendung eines Bindemittel-Systems nach Anspruch 1 bis 9, **dadurch gekennzeichnet, dass** das Isocyanat-terminierte Polyurethan-Präpolymer kein Polyether-Polymerrückgrat aufweist, das einen Amin-initiierten Polyether umfasst.

11. Verfahren zur Herstellung von Folienverbunden für Lebensmittelverpackungen, **dadurch gekennzeichnet, dass** man mindestens zwei gleiche oder unterschiedliche Kunststofffolien teil-oder vollflächig verklebt unter Verwendung eines Bindemittel-Systems nach einem der Ansprüche 1 bis 10.

12. Folienverbund für Lebensmittelverpackungen, hergestellt nach dem Verfahren gemäß Anspruch 11.

13. Verwendung einer Zusammensetzung, die mindestens ein alkoxyliertes Diamin in einer Menge von 0,5 bis 20 Gew.-%, insbesondere 1 bis 10 Gew.-%, und mindestens ein Polyol in einer Menge von 80 bis 99,5 Gew.-%, vorzugsweise 90 bis 99 Gew.-%, bezogen auf die Polyolmischung enthält, als Härterkomponente in Klebstoffformulierungen, die auf Polyurethan-Präpolymeren basieren, welche mit aromatischen Isocyanaten terminiert sind, zur Herstellung migratarmer Klebeverbindungen zwischen Kunststofffolien für Lebensmittelverpackungen.

## Claims

1. A use of a binder system containing
(i) a resin component containing at least one isocyanate-terminated polyurethane prepolymer; and
(ii) a hardener component containing at least one alkoxylated diamine as a laminating adhesive for food packaging.

2. The use of a binder system according to claim 1, **characterized in that** the at least one alkoxylated diamine is a polyether polyol obtainable by polymerization of ethylene oxide and/or propylene oxide using a diamine as starter, in particular an ethoxylated and/or propoxylated alkylene diamine.

3. The use of a binder system according to claim 2, **characterized in that** the diamines are selected from ethylenediamine, **N,N**-dimethylethylenediamine, **N,N**'-dimethylethylenediamine, propylene diamine, tetramethylenediamine, hexamethylenediamine, 2,4-toluylenediamine, 2,6-toluylenediamine, diphenylmethane-2,2'-diamine, diphenylmethane-2,4'-diamine, diphenylmethane-4,4'-diamine, isophorone diamine, dicyclohexylmethane-4,4'-diamine, and xylylenediamine, preferably from ethylenediamine, N,N-dimethylethylenediamine, and N,N'-dimethylethylenediamine, particularly preferably ethylenediamine.

4. The use of a binder system according to any of claims 1 to 3, **characterized in that** the at least one alkoxylated diamine is a compound of formula I:
H[O-CHR-CH₂]ₘ-NR'-(CH₂)ₙ-NR'-[CH₂-CHR-O]ₘ-H (I)
where
each R is independently selected from H, CH₃ and CH₂-CH₃, preferably H and CH₃, particularly preferably CH₃;
each R' is independently selected from H and -[CH₂-CHR-O]ₘ-H, preferably -[CH₂-CHR-O]ₘ-H;
each m is independently an integer from 1 to 10, preferably from 1 to 4, and more preferably from 1 to 2;
n is an integer from 1 to 10, preferably from 1 to 6, particularly preferably from 2 to 4, most preferably 2.

5. The use of a binder system according to claim 4, **characterized in that** the at least one alkoxylated diamine is a propoxylated or ethoxylated/propoxylated ethylenediamine having 2 to 8 units propylene oxide/ethylene oxide per ethylenediamine unit.

6. The use of a binder system according to any of claims 1 to 5,
**characterized in that** the hardener component contains the at least one alkoxylated diamine in an amount of 0.5 to 20 wt.%, in particular 1 to 10 wt.%, based on the hardener component.

7. The use of a binder system according to any of claims 1 to 6,
**characterized in that** the hardener component further contains at least one polyol, in particular at least one di- and/or trifunctional polyether polyol.

8. The use of a binder system according to any of claims 1 to 7,
**characterized in that** the isocyanate-terminated polyurethane prepolymer contains aromatic isocyanate groups, in particular methylene diphenyl diisocyanate (MDI) groups, and optionally aromatic polyisocyanate monomers, in particular aromatic diisocyanate monomers.

9. The use of a binder system according to any of claims 1 to 8,
**characterized in that** the isocyanate-terminated polyurethane prepolymer has a polyester/polyether polymer backbone.

10. The use of a binder system according to claims 1 to 9,
**characterized in that** the isocyanate-terminated polyurethane prepolymer does not have a polyether polymer backbone which comprises an amine-initiated polyether.

11. A method for preparing film composites for food packaging,
**characterized in that** at least two identical or different plastics films are bonded over part or all of the surfaces thereof using a binder system according to any of claims 1 to 10.

12. A film composite for food packaging, prepared in accordance with the method according to claim 11.

13. A use of a composition which contains at least one alkoxylated diamine in an amount of 0.5 to 20 wt.%, in particular 1 to 10 wt.%, and at least one polyol in an amount of 80 to 99.5 wt.%, preferably 90 to 99 wt.%, based on the polyol mixture, as a hardener component in adhesive formulations which are based on polyurethane prepolymers which are terminated with aromatic isocyanates, for preparing weak migrating adhesive bonds between plastics films for food packaging.

## Revendications

1. Utilisation d'un système de liant contenant
(i) un composant de résine contenant au moins un prépolymère de polyuréthane à terminaison isocyanate ; et
(ii) un composant de durcisseur qui contient au moins une diamine alcoxylée, comme adhésif de stratification pour des emballages alimentaires.

2. Utilisation d'un système de liant selon la revendication 1,
**caractérisée en ce que** l'au moins une diamine alcoxylée est un polyétherpolyol qui peut être obtenu par polymérisation d'oxyde d'éthylène et/ou d'oxyde de propylène à l'aide d'une diamine comme initiateur, en particulier une alkylènediamine éthoxylée et/ou propoxylée.

3. Utilisation d'un système de liant selon la revendication 2,
**caractérisée en ce que** la diamine est choisie parmi éthylènediamine, N,N-diméthyléthylènediamine, N,N'-diméthyléthylènediamine, propylènediamine, tétraméthylènediamine, hexaméthylènediamine, 2,4-toluènediamine, 2,6-toluènediamine, diphénylméthane-2,2'-diamine, diphénylméthane-2,4'-diamine, diphénylméthane-4,4'-diamine, isophoronediamine, dicyclohexylméthane-4,4'-diamine et xylylènediamine, de préférence parmi éthylènediamine, N,N-diméthyléthylènediamine et N,N'-diméthyléthylènediamine, de manière particulièrement préférée est l'éthylènediamine.

4. Utilisation d'un système de liant selon l'une des revendications 1 à 3, **caractérisée en ce que** l'au moins une diamine alcoxylée est un composé de formule I :
H[O-CHR-CH₂]ₘ-NR'-(CH₂)ₙ-NR'-[CH₂-CHR-O]ₘ-H (I)
dans laquelle
chaque R est choisi, indépendamment, parmi H, CH₃ et CH₂-CH₃, de préférence parmi H et CH₃, de manière particulièrement préférée est CH₃ ;
chaque R' est choisi, indépendamment, parmi H et -[CH₂-CHR-O]ₘ-H, de préférence est -[CH₂-CHR-O]ₘ-H ;
chaque m représente, indépendamment, un nombre entier de 1 à 10, de préférence de 1 à 4, encore plus préférablement de 1 à 2 ;
n représente un nombre entier de 1 à 10, de préférence de 1 à 6, de manière particulièrement préférée de 2 à 4, le plus préférablement est 2.

5. Utilisation d'un système de liant selon la revendication 4,
**caractérisée en ce que** l'au moins une diamine alcoxylée est une éthylènediamine propoxylée ou éthoxylée/propoxylée comportant 2 à 8 motifs d'oxyde de propylène/oxyde d'éthylène par motif d'éthylènediamine.

6. Utilisation d'un système de liant selon l'une des revendications 1 à 5, **caractérisée en ce que** le composant de durcisseur contient l'au moins une diamine alcoxylée en une quantité allant de 0,5 à 20 % en poids, en particulier de 1 à 10 % en poids, par rapport au composant de durcisseur.

7. Utilisation d'un système de liant selon l'une des revendications 1 à 6, **caractérisée en ce que** le composant de durcisseur contient en outre au moins un polyol, en particulier au moins un polyétherpolyol difonctionnel et/ou trifonctionnel.

8. Utilisation d'un système de liant selon l'une des revendications 1 à 7, **caractérisée en ce que** le prépolymère de polyuréthane à terminaison isocyanate contient des groupes isocyanate aromatiques, en particulier des groupes méthylènediphényldiisocyanate (MDI), et éventuellement des monomères de polyisocyanate aromatiques, en particulier des monomères de diisocyanate aromatiques.

9. Utilisation d'un système de liant selon l'une des revendications 1 à 8, **caractérisée en ce que** le prépolymère de polyuréthane à terminaison isocyanate présente un squelette de polymère polyester/polyéther.

10. Utilisation d'un système de liant selon les revendications 1 à 9, **caractérisée en ce que** le prépolymère de polyuréthane à terminaison isocyanate ne présente pas de squelette de polymère polyéther qui comprend un polyéther initié par amine.

11. Procédé de fabrication de films composites pour des emballages alimentaires, **caractérisé en ce que** l'on colle, sur une partie de la surface ou sur toute la surface, au moins deux films en plastique identiques ou différents à l'aide d'un système de liant selon l'une des revendications 1 à 10.

12. Film composite pour des emballages alimentaires, fabriqué selon le procédé conformément à la revendication 11.

13. Utilisation d'une composition qui contient au moins une diamine alcoxylée en une quantité allant de 0,5 à 20 % en poids, en particulier de 1 à 10 % en poids, et au moins un polyol en une quantité allant de 80 à 99,5 % en poids, de préférence de 90 à 99 % en poids, par rapport au mélange de polyols, comme composant de durcisseur dans des formulations d'adhésifs qui sont à base de prépolymères de polyuréthane, lesquels sont terminés par des isocyanates aromatiques, pour la fabrication de composés adhésifs à faible migration entre des films en plastique pour des emballages alimentaires.
